# EUROPEAN PATENT APPLICATION

(11) **EP 1 975 930 A2**
(43) Date of publication of application: **01.10.2008**
(21) Application number: 08005689.8
(22) Date of filing: 26.03.2008
(51) Int. Cl.: G11B 7/0065, G03H 1/28

(54) **Multiplexing hologram recording and reconstructing apparatus and method therefor**

(30) Priority: 27.03.2007 JP 2007082004; 04.06.2007 JP 2007148408
(71) Applicant: Sharp Kabushiki Kaisha, Osaka 545-8522 (JP)
(72) Inventor: Okada, Kuniaki, Nara 632-0033 (JP); Nagasaka, Yukiko, Nara 632-0004 (JP)
(74) Representative: Müller - Hoffmann & Partner

(57) **Abstract**

A hologram recording and reconstructing apparatus (100A) includes a rotating mirror (16), a rectangular aperture (12) and a medium drive unit (38A), records interference fringes of a reference beam (RL) and a signal beam (SL) in a hologram recording medium (30) and reconstructs the hologram recorded in the hologram recording medium (30). The rotating mirror (16) changes the angle of incidence of the reference beam (RL) incident on the hologram recording medium (30) such that multiple data is recorded in the same recording region of the hologram recording medium (30). The rectangular aperture (12) blocks a reconstructed beam from a hologram adjacent to the hologram to be reconstructed. The medium drive unit (38A) drives the hologram recording medium (30) such that the angle of incidence of the signal beam (SL) and the reference beam (RL) incident on the hologram recording medium (30) is changed.

## Description

This nonprovisional application is based on Japanese Patent Applications Nos. 2007-082004 and 2007-148408 filed with the Japan Patent Office on March 27 and June 4, 2007, respectively, the entire contents of which are hereby incorporated by reference.

### BACKGROUND OF THE INVENTION

### Field of the Invention

The present invention relates to hologram recording and reconstructing apparatus and method, and particularly to hologram recording and reconstructing apparatus and method for recording interference fringes of a reference beam and a signal beam in a multiplexing manner in a hologram recording medium.

### Description of the Background Art

Hologram recording, namely to record information in a recording medium using holography, is generally performed by superposing a signal beam having image information and a reference beam inside a hologram recording medium to produce interference fringes and writing the interference fringes in the hologram recording medium. In order to reconstruct the recorded information, the hologram recording medium is irradiated with the reference beam to reconstruct the image information through diffraction caused by interference fringes. The reconstructed image information is image-processed to produce a reconstruction signal. In this way, in the hologram recording medium, interference fringes are written in three dimension. The multiplexing recording can be used to increase the storage capacity.

As to the multiplexing method for the hologram recording, various methods have been proposed including, for example, angular multiplexing and peristrophic multiplexing. Regarding the angular multiplexing, those disclosed in Conventional Document 1 (Japanese Patent Laying-Open No. 2004-272268) and Conventional Document 2 (Kevin Curtis, "Holographic Professional Archive Drive," Technical Digest of International Symposium on Optical Memory 2006 (ISOM'06)) are known.

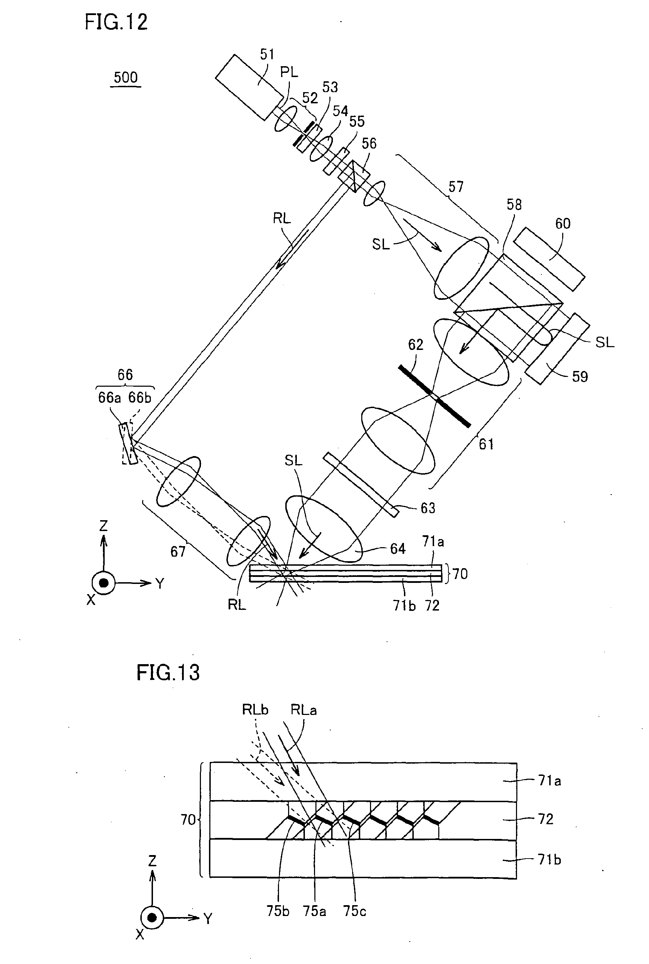

Fig. 12 shows a configuration in a recording operation of a conventional angular-multiplexing hologram recording and reconstructing apparatus 500.

Referring to Fig. 12, conventional hologram recording and reconstructing apparatus 500 includes a laser source 51, a spatial filter 52, a shutter 53, a collimator lens 54, half-wave plates 55, 63, a polarizing beam splitter (PBS) 56 for splitting into a signal beam and a reference beam, a beam expander 57, a polarizing beam splitter 58 for splitting into a record light and a reconstructed beam, a spatial light modulator (SLM) 59, an image pickup device 60, relay lenses 61, 67, a polytopic aperture 62, an objective lens 64, and a rotating mirror 66. Hologram recording and reconstructing apparatus 500 causes interference between a signal beam SL and a reference beam RL in a hologram recording medium 70 to record resultant interference fringes, and changes the angle of incidence of reference beam RL (the angle of light incident on an object, hereinafter referred to as "angle of incidence") for recording a hologram in an angular multiplexing manner.

A recording operation of hologram recording and reconstructing apparatus 500 will be described in detail.

A laser light PL emitted from laser source 51 is converted by spatial filter 52 and collimator lens 54 into the light with a desired beam diameter and split by polarizing beam splitter 56 into signal beam SL and reference beam RL. The split ratio between signal beam SL and reference beam RL is adjusted by rotation of half-wave plate 55.

Reference beam RL is deflected by rotating mirror 66 to pass through relay lens 67 configured using two telecentric lenses and then applied to hologram recording medium 70 at a set angle of incidence. The angle of incidence of reference beam RL which is incident on hologram recording medium 70 is changed by a change of the rotational angle of rotating mirror 66 that rotates about the X axis.

The position where reference beam RL is incident on hologram recording medium 70 is not changed even if rotating mirror 66 is rotated, since relay lens 67 is configured with the two telecentric lenses. Reference beam RL is incident on hologram recording medium 70 through the path indicated by the solid line in the case where rotating mirror 66 is at the position of rotation mirror 66a. When rotating mirror 66 is at the position of rotation mirror 66b, the light is incident on hologram recording medium 70 through the path indicated by the broken line. Therefore, as shown in Fig. 12, the position where reference beam RL is incident on hologram recording medium 70 does not change regardless of the paths through which the light travels.

Signal beam SL has its beam diameter adjusted by beam expander 57 such that the whole surface of spatial light modulator 59 is irradiated with the signal beam, and is amplitude-modulated or phase-modulated by spatial light modulator 59. Modulated signal beam SL is reflected by polarizing beam splitter 58 to be directed toward hologram recording medium 70. Unnecessary diffracted light generated at spatial light modulator 59 is blocked by polytopic aperture 62. Signal beam SL reflected by polarizing beam splitter 58 passes through relay lens 61 and half-wave plate 63 and is collected by objective lens 64 in hologram recording medium 70. Collected signal beam SL and above-described reference beam RL are superposed within hologram recording medium 70, and the light intensity distribution of the resultant interference fringes is recorded as a hologram.

After the information is once recorded in hologram recording medium 70, a data page to be recorded next is displayed at spatial light modulator 59. In addition, rotating mirror 66 rotates slightly to change the angle of incidence of reference beam RL. After this, shutter 53 is opened to record the next-recorded data page in the same recording region of hologram recording medium 70 by the angular multiplexing. This operation is repeated. When a predetermined degree of multiplexing is reached, hologram recording medium 70 is shifted in the X direction or Y direction to make a record in a next recording region in the multiplexing manner as described above.

Fig. 13 is a cross section showing an example of the structure of hologram recording medium 70.

Referring to Fig. 13, hologram recording medium 70 is structured including two substrates 71a and 71b and a photosensitive photopolymer 72 sandwiched therebetween. Photosensitive photopolymer 72 is irradiated with reference beam RLa and reference beam RLb at various angles and different positions to produce holograms 75a to 75c. Angular multiplexing is thus accomplished.

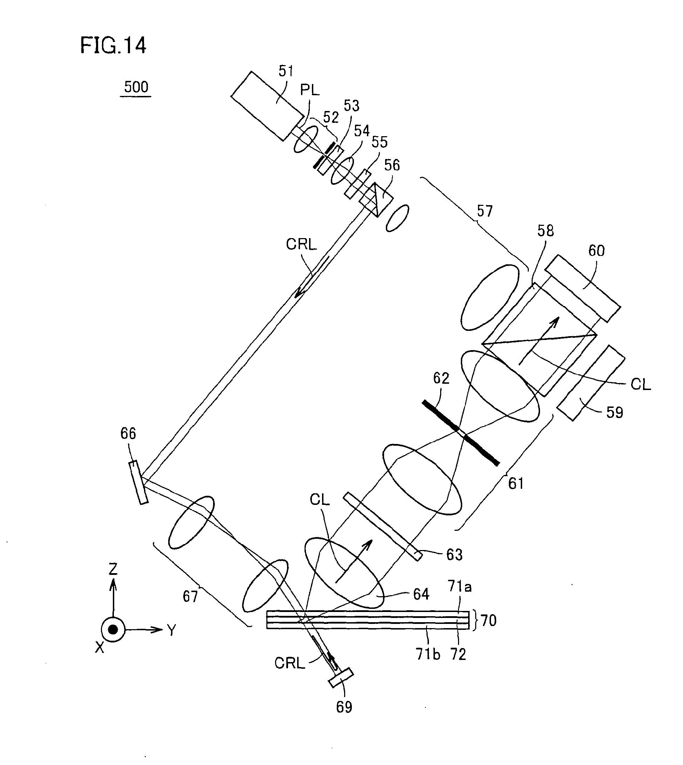

Fig. 14 shows a configuration in a reconstructing operation of conventional angular-multiplexing hologram recording and reconstructing apparatus 500.

Referring to Fig. 14, the configuration of hologram recording and reconstructing apparatus 500 is similar to the one described with reference to Fig. 12 except that a rotating mirror 69 is added. Therefore, the description thereof will not be repeated here. A reconstructing operation of hologram recording and reconstructing apparatus 500 will be described in detail.

In order to reconstruct the hologram recorded as described above, half-wave plate 55 is rotated such that laser light PL is s-polarized. S-polarized laser light PL is all reflected by polarizing beam splitter 56. Therefore, only a reference beam for reconstruction CRL is generated. Reference beam for reconstruction CRL passes via rotating mirror 66 and relay lens 67 and once passes through hologram recording medium 70. Reference beam for reconstruction CRL having passed the medium is reflected by rotating mirror 69, then travels through the same path as the incoming path in the opposite direction, and enters hologram recording medium 70.

Hologram recording medium 70 is thus irradiated with reference beam for reconstruction CRL, and a reconstructed beam CL toward objective lens 64 is generated. Reconstructed beam CL passes through objective lens 64 and relay lens 61 to form an image at image pickup device 60. Based on the image formed by reconstructed beam CL, a reconstruction image signal is generated. Then, rotating mirror 66 is rotated to change the angle of incidence of reference beam for reconstruction CRL which is incident on hologram recording medium 70. Accordingly, from the same recording region of hologram recording medium 70, reconstructed beam CL corresponding to another data page is generated and the next reconstruction image data is obtained by image pickup device 60.

In the above-described reconstructing operation, reference beam for reconstruction CRL is also applied to an adjacent hologram. Therefore, reconstructed beam CL is also generated from this adjacent hologram. Reconstructed beam CL from the adjacent hologram, however, can be blocked by polytopic aperture 62 as described above. Thus, with hologram recording and reconstructing apparatus 500 in Fig. 14, the reconstructing operation with less cross talk can be achieved even if the recording pitch in any in-plane direction (X direction, Y direction) of hologram recording medium 70 is narrowed.

Further, Conventional Document 3 (Japanese Patent Laying-Open No. 2000-338846) discloses, as a multiplexing method for hologram recording, a peristrophic multiplexing method. The peristrophic multiplexing method is a method rotating a reference beam within a conical plane whose peak is located at a hologram recording medium, and this method can be regarded as one type of the angular multiplexing method. A hologram recording and reconstructing apparatus of Conventional Document 3 applies a signal beam in the direction normal to the plane of the hologram recording medium.

Furthermore, Conventional Document 4 (Ju-Seog Jang et al., "Holographic data storage by combined use of peristrophic, angular, and spatial multiplexing," Optical Engineering, Vol. 39, No. 11, November 2000, pp. 2975-2981) discloses holographic data storage using a combination of peristrophic multiplexing, angular multiplexing and spatial multiplexing.

Regarding conventional hologram recording and reconstructing apparatus 500, in order to increase the amount of data recorded in hologram recording medium 70, it is effective to increase the thickness of hologram recording medium 70. The conventional angular multiplexing recording method, however, can form a hologram only in a region where the center is the focus of objective lens 64. Therefore, even if hologram recording medium 70 is thickened, the region where the hologram is formed cannot be enlarged and a remarkable increase of the storage capacity has not been achieved.

### SUMMARY OF THE INVENTION

An object of the present invention is to provide a hologram recording and reconstructing apparatus and a hologram recording and reconstructing method with which the storage capacity can be increased.

According to an aspect of the present invention, a hologram recording and reconstructing apparatus recording an interference fringe of a reference beam and a signal beam as a hologram in a recording medium and reconstructing the hologram recorded in the recording medium, includes: a deflection unit changing an angle of incidence of the reference beam incident on the recording medium such that multiple data is recorded in a same recording region of the recording medium; and a drive unit changing an angle formed by a plane including respective light axes of the reference beam and the signal beam and a plane of the recording medium.

Preferably, the drive unit rotates the recording medium about an axis that is a line of intersection where the plane including respective light axes of the reference beam and the signal beam and the plane of the recording medium intersect with each other.

According to another aspect of the present invention, a hologram recording and reconstructing apparatus recording an interference fringe of a reference beam and a signal beam as a hologram in a recording medium and reconstructing the hologram recorded in the recording medium, includes: a deflection unit changing an angle of incidence of the reference beam incident on the recording medium such that multiple data is recorded in a same recording region of the recording medium; and a drive unit changing an angle of a line of intersection in a plane of the recording medium, the line of intersection being a line where a plane including respective light axes of the reference beam and the signal beam and the plane of the recording medium intersect with each other.

Preferably, the drive unit rotates the recording medium in the plane of the recording medium about a center of rotation that is a point of intersection where respective light axes of the reference beam and the signal beam intersect with each other.

According to still another aspect of the present invention, a hologram recording and reconstructing apparatus recording an interference fringe of a reference beam and a signal beam as a hologram in a recording medium and reconstructing the hologram recorded in the recording medium, includes: a deflection unit changing an angle of incidence of the reference beam incident on the recording medium such that multiple data is recorded in a same recording region of the recording medium; and a light blocking unit blocking a reconstructed beam from a hologram adjacent to the hologram to be recorded. The deflection unit deflects the reference beam in a first plane including an optical axis of the signal beam and a line normal to the recording medium and in a second plane perpendicular to the first plane.

Preferably, the hologram recording and reconstructing apparatus further includes a medium drive unit driving the recording medium in a direction normal to the recording medium or a direction along the optical axis of the signal beam.

Preferably, the deflection unit changes the angle of incidence of the reference beam incident on the recording medium according to a shift of the recording medium.

Preferably, the hologram recording and reconstructing apparatus further includes a device drive unit driving a light collecting device included in an optical system generating the signal beam, along the optical axis of the signal beam.

Preferably, the deflection unit changes the angle of incidence of the reference beam incident on the recording medium according to a shift of the light collecting device.

Preferably, the deflection unit includes a rotating mirror.

Preferably, the deflection unit includes a two-focus lens directing the signal beam to the recording medium.

Preferably, the deflection unit is provided with a polarizing hologram having a diffraction efficiency changed according to a direction of polarization of an incident light.

Preferably, the hologram recording and reconstructing apparatus further includes a spatial light modulator modulating the signal beam. The spatial light modulator is a reflective liquid crystal spatial light modulator converting the incident signal beam into a p-polarized light or s-polarized light pixel by pixel and emitting the converted signal beam.

According to a further aspect of the present invention, a hologram recording and reconstructing method of recording an interference fringe of a reference beam and a signal beam as a hologram in a recording medium and reconstructing the hologram recorded in the recording medium, includes the steps of: changing an angle of incidence of the reference beam incident on the recording medium such that multiple data is recorded in a same recording region of the recording medium; and rotating the recording medium about an axis that is a line of intersection where a plane including respective light axes of the reference beam and the signal beam and a plane of the recording medium intersect with each other.

According to a further aspect of the present invention, a hologram recording and reconstructing method of recording an interference fringe of a reference beam and a signal beam as a hologram in a recording medium and reconstructing the hologram recorded in the recording medium, includes the steps of: changing an angle of incidence of the reference beam incident on the recording medium such that multiple data is recorded in a same recording region of the recording medium; and rotating the recording medium in a plane of the recording medium about a center of rotation that is a point of intersection where respective light axes of the reference beam and the signal beam intersect with each other.

According to a further aspect of the present invention, a hologram recording and reconstructing method of recording an interference fringe of a reference beam and a signal beam as a hologram in a recording medium and reconstructing the hologram recorded in the recording medium, includes the steps of: changing an angle of incidence of the reference beam incident on the recording medium such that multiple data is recorded in a same recording region of the recording medium; and blocking a reconstructed beam from a hologram adjacent to the hologram to be recorded.

Preferably, the step of changing the angle of incidence includes the step of deflecting the reference beam in a first plane including an optical axis of the signal beam and a line normal to the recording medium and in a second plane perpendicular to the first plane.

Preferably, the step of changing the angle of incidence includes the step of changing the angle of incidence of the reference beam incident on the recording medium, according to a shift of the recording medium or a shift of a light collecting device included in an optical system generating the signal beam.

According to the present invention, the storage capacity can be increased to a great extent.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows a configuration in a recording operation of a hologram recording and reconstructing apparatus 100A according to a first embodiment of the present invention.
Fig. 2 shows a configuration in a reconstructing operation of hologram recording and reconstructing apparatus 100A according to the first embodiment of the present invention.
Fig. 3 is a cross section showing an example of a structure of a hologram recording medium 30.
Fig. 4 is a perspective view showing a positional relation between respective light axes of a signal beam SL and a reference beam RL for hologram recording medium 30.
Fig. 5 shows a configuration in a recording operation of a hologram recording and reconstructing apparatus 100B according to a second embodiment of the present invention.
Fig. 6 is a perspective view showing a positional relation between respective light axes of a signal beam SL and a reference beam RL for a hologram recording medium 30.
Fig. 7 shows a configuration in a recording operation of a hologram recording and reconstructing apparatus 100C according to a third embodiment of the present invention.
Fig. 8 shows a configuration in a recording operation of a hologram recording and reconstructing apparatus 100D according to a fourth embodiment of the present invention.
Fig. 9 shows a configuration in a reconstructing operation of a hologram recording and reconstructing apparatus 100E according to a fifth embodiment of the present invention.
Fig. 10 is a cross section showing an example of a structure of a hologram recording medium 30.
Fig. 11 shows a configuration in a recording operation of a hologram recording and reconstructing apparatus 100F according to a sixth embodiment of the present invention.
Fig. 12 shows a configuration in a recording operation of a conventional angular-multiplexing hologram recording and reconstructing apparatus 500.
Fig. 13 is a cross section showing an example of a structure of a hologram recording medium 70.
Fig. 14 shows a configuration in a reconstructing operation of conventional angular-multiplexing hologram recording and reconstructing apparatus 500.

### DESCRIPTION OF THE PREFERRED EMBODIMENTS

Embodiments of the present invention will be hereinafter described in detail with reference to the drawings. In the drawings, like or corresponding components are denoted by like reference characters and a description thereof will not be repeated.

### First Embodiment

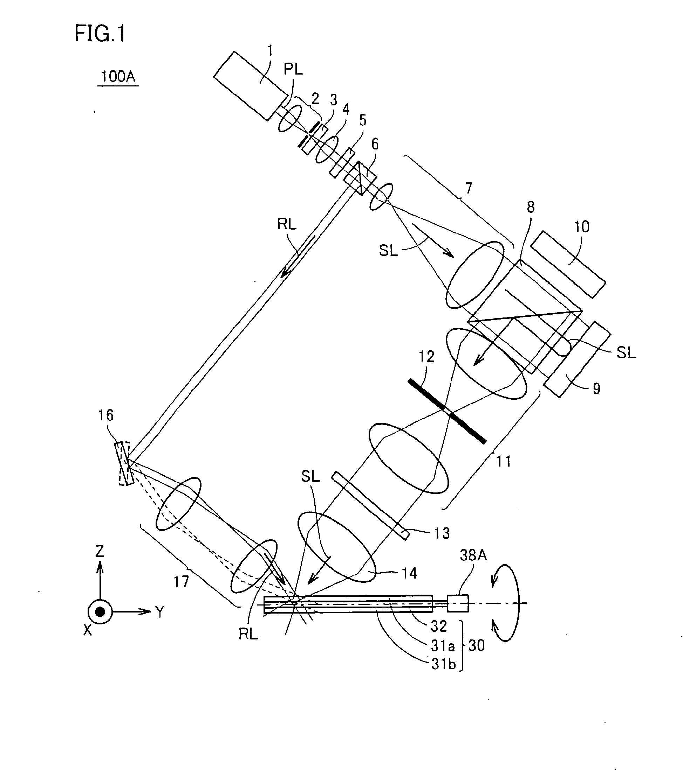

Fig. 1 shows a configuration in a recording operation of a hologram recording and reconstructing apparatus 100A according to a first embodiment of the present invention.

Referring to Fig. 1, hologram recording and reconstructing apparatus 100A in the first embodiment includes a laser source 1, a spatial filter 2, a shutter 3, a collimator lens 4, half-wave plates 5, 13, a polarizing beam splitter (PBS) 6 for splitting into a signal beam and a reference beam, a beam expander 7, a polarizing beam splitter 8 for splitting into a record light and a reconstructed beam, a spatial light modulator (SLM) 9, an image pickup device 10, relay lenses 11, 17, a rectangular aperture 12, an objective lens 14, a rotating mirror 16, and a medium drive unit 38A.

Hologram recording and reconstructing apparatus 100A records a hologram in a hologram recording medium 30 using an angular multiplexing method. Hologram recording medium 30 includes glass substrates 31a, 31b and a hologram recording layer 32. Hologram recording medium 30 is driven by medium drive unit 38A. Rectangular aperture 12 is, for example, a polytopic aperture.

A recording operation of hologram recording and reconstructing apparatus 100A will be described in detail.

A laser light PL emitted from laser source 1 is converted by spatial filter 2 and collimator lens 4 into a light having a desired beam diameter, and then split into a signal beam SL and a reference beam RL by polarizing beam splitter 6. The split ratio between signal beam SL and reference beam RL is adjusted by rotation of half wave plate 5.

Reference beam RL is deflected by rotating mirror 16. Deflected reference beam RL passes through relay lens 17 configured with two telecentric lenses, and is applied at a set angle of incidence to hologram recording medium 30. The angle of incidence of reference beam RL which is incident on hologram recording medium 30 is changed by a change of the rotational angle of rotating mirror 16 that rotates about the X axis.

The position where reference beam RL is incident on hologram recording medium 30 is not changed, since relay lens 17 is configured using two telecentric lenses, even if rotating mirror 16 is rotated. An example of a rotating mirror with a fast response and high angular precision is a galvano mirror.

Signal beam SL has its beam diameter adjusted by beam expander 7 to irradiate the whole surface of spatial light modulator 9, and is amplitude-modulated or phase-modulated by spatial light modulator 9. As spatial light modulator (SLM) 9, for example, a reflective liquid crystal spatial modulator, DMD (Digital Mirror Device), or a spatial light modulator using the magnetooptical effect or electrooptical effect can be used. Here, a description will be given of amplitude modulation of signal beam SL using a reflective liquid crystal spatial light modulator as spatial light modulator 9.

Spatial light modulator 9 which is a reflective liquid crystal spatial light modulator converts incident p-polarized signal beam SL into p-polarized or s-polarized light pixel by pixel and emits the converted light. Signal beam SL having an s-polarized light component is reflected by polarizing beam splitter 8 and directed toward hologram recording medium 30. Signal beam SL reflected by polarizing beam splitter 8 passes through relay lens 11 and half-wave plate 13 and is collected by objective lens 14 in hologram recording medium 30. Collected signal beam SL and above-described reference beam RL are superposed in hologram recording medium 30 to generate interference fringes. The light intensity distribution of the interference fringes is recorded as a hologram.

Unnecessary diffracted light generated at spatial light modulator 9 is blocked by rectangular aperture 12. Rectangular aperture 12 is a light-blocking mask having a rectangular opening whose center corresponds to the optical axis of the beam of signal beam SL. In Fig. 1, the rectangular aperture is disposed at a lens focal plane of relay lens 11. In a recording operation, on the lens focal plane of relay lens 11, a Fourier-transformed image of a light amplitude pattern formed by spatial light modulator 9 is formed. The Fourier-transformed image includes a plurality of bright spots and a bright spot located at the center of the optical axis is called zero-order diffracted light surrounded by higher-order diffracted light such as first-order light, second-order light, third-order light ...

Respective intensity distributions of the diffracted light beams are identical in shape while the peak value is different. Hologram recording usually passes only the zero-order light for making a record in hologram recording medium 30 for the purpose of increasing the recording density. Rectangular aperture 12 has the function of removing any surrounding higher-order diffracted light.

Once the information is recorded in hologram recording medium 30, a data page to be recorded next is thereafter indicated at spatial light modulator 9. In addition, rotating mirror 16 is slightly rotated to change the angle of incidence of reference beam RL. After this, shutter 3 is opened and the data page to be recorded next is recorded in the same recording region of hologram recording medium 30 in an angular multiplexing manner.

The above-described multiplex recording is repeated. When a predetermined degree of multiplexing is reached, medium drive unit 38A shifts hologram recording medium 30 in the X direction, the Y direction and further in the Z direction. Specifically, medium drive unit 38A shifts hologram recording medium 30 for example in the Z direction or the direction along the optical axis of signal beam SL. In a recording region after the shift, the multiplex recording is performed similarly to the one as described above.

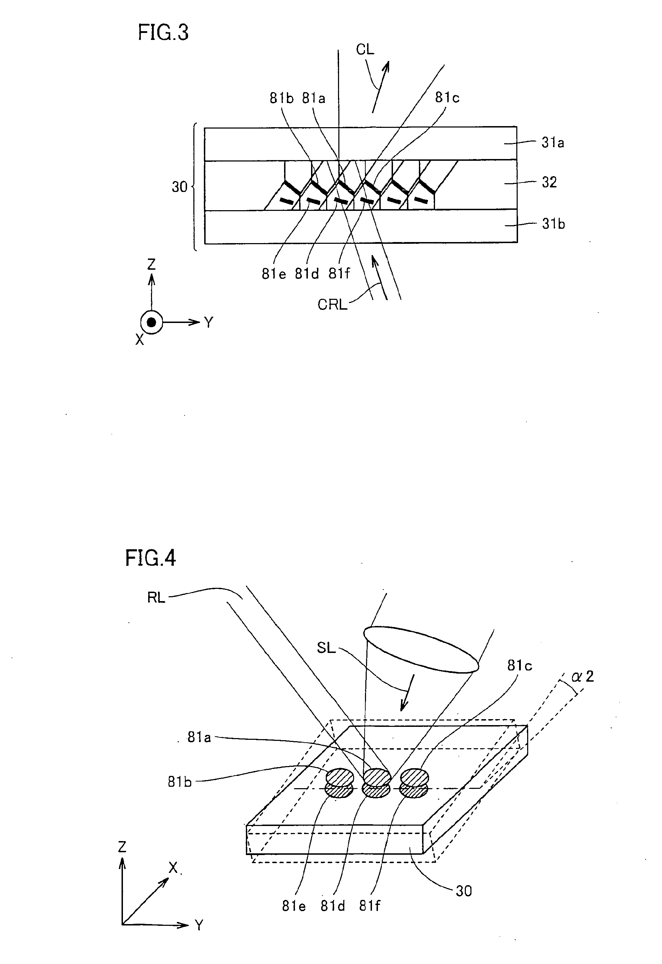

In the case where hologram recording medium 30 is shifted in the Z direction, hologram recording medium 30 is shifted in the state where an angle α formed by the plane including the optical axis of reference beam RL and the optical axis of signal beam SL in the recording operation, namely the YZ plane, and the plane of hologram recording medium 30 is changed (see Fig. 4 in addition). When hologram recording medium 30 is rotated by a rotational angle α, the angle of incidence of signal beam SL and reference beam RL that are incident on hologram recording medium 30 is changed by angle α. This can be achieved by, for example, rotating hologram recording medium 30 about an axis that is a line where the YZ plane and hologram recording medium 30 intersect with each other.

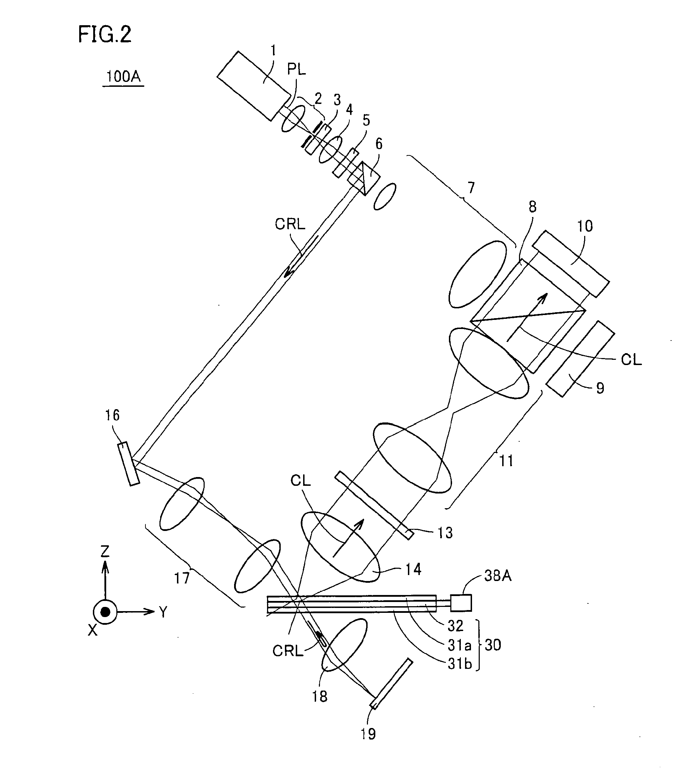

Fig. 2 shows a configuration in a reconstructing operation of hologram recording and reconstructing apparatus 100A in the first embodiment of the present invention.

Referring to Fig. 2, the configuration of hologram recording and reconstructing apparatus 100A in the first embodiment is similar to the one described with reference to Fig. 1 except that rectangular aperture 12 is absent and a telecentric lens 18 and a mirror 19 are added. Therefore, the description will not be repeated here. A reconstructing operation of hologram recording and reconstructing apparatus 100A will now be described in detail.

In order to reconstruct the hologram recorded as described above, half-wave plate 5 is rotated to provide s-polarized laser light PL. S-polarized laser light PL is all reflected by polarizing beam splitter 6. Therefore, only a reference beam for reconstruction CRL is generated. Reference beam for reconstruction CRL passes through rotating mirror 16 and relay lens 17 and once passes through hologram recording medium 30. Reference beam for reconstruction CRL having passed the medium travels through telecentric lens 18 and is then reflected by mirror 19, and travels through the same path as the incoming path in the opposite direction and enters hologram recording medium 30.

Reference beam for reconstruction CRL is thus applied to hologram recording medium 30 to generate a reconstructed beam CL toward objective lens 14. Reconstructed beam CL passes through objective lens 14 and relay lens 11 to form an image at image pickup device 10. Based on reconstructed beam CL forming the image, a reconstruction image signal is generated. Then, rotating mirror 16 is rotated to change the angle of incidence of reference beam for reconstruction CRL incident on hologram recording medium 30. In this way, from the same recording region of hologram recording medium 30, reconstructed beam CL for another data page is generated, and the next reconstruction image data is obtained by image pickup device 10.

As described in detail hereinlater, regarding the above-described reconstructing operation, in the case where holograms are recorded in the Z direction of hologram recording medium 30, a hologram adjacent in the Z direction to a hologram to be reconstructed is also irradiated with reference beam for reconstruction CRL. However, since hologram recording medium 30 is rotated by rotational angle α in recording, the angle of incidence of the reference beam of the YZ plane is different between a hologram recorded in an upper layer and a hologram recorded in a lower layer. Hologram recording medium 30 is placed at the position when each hologram is recorded, and thus the hologram in the upper layer and the hologram in the lower layer each can be reconstructed. Therefore, the reconstructing operation with less cross talk can be achieved.

Fig. 3 is a cross section showing an example of a structure of hologram recording medium 30.

Referring to Fig. 3, hologram recording medium 30 includes glass substrates 31a, 31b and a hologram recording layer 32. For hologram recording layer 32, a photopolymer material which is sensitive to the oscillating wavelength of laser source 1 in Figs. 1 and 2 is used. Hologram recording and reconstructing apparatus 100A uses interference between signal beam SL collected by objective lens 14 and parallel reference beam RL to record a hologram. Therefore, holograms are each recorded with a high intensity at the point where signal beam SL is collected. In Fig. 3, the record in a central region is made with holograms 81a to 81c. In order to avoid cross talk between holograms 81a to 81c, holograms 81a to 81c are recorded with the distance therebetween controlled.

Further, hologram recording and reconstructing apparatus 100A shifts hologram recording medium 30 in the Z direction for recording a hologram. At this time, the point where signal beam SL is collected is also shifted in the Z direction in hologram recording layer 32. Therefore, holograms are recorded such that the central region of recorded holograms is also shifted from the region of holograms 81a to 81c to the region of holograms 81d to 81f.

In Fig. 3, when reference beam for reconstruction CRL for reconstructing hologram 81a is applied, reconstructed beam CL is generated from hologram 81a. At this time, reference beam for reconstruction CRL is also applied to underlying holograms 81d and 81f.

Hologram recording and reconstructing apparatus 100A in the first embodiment rotates hologram recording medium 30 for recording holograms 81a to 81c in the upper layer of hologram recording layer 32 and recording holograms 81d to 81f in the lower layer thereof. In this way, the angle between the plane including the optical axis of reference beam RL and the optical axis of signal beam SL in the recording operation, namely the YZ plane, and the plane of hologram recording medium 30 is changed.

Fig. 4 is a perspective view showing a positional relation between respective light axes of signal beam SL and reference beam RL for hologram recording medium 30.

Referring to Fig. 4, when upper-layer holograms 81a to 81c are recorded, the angle of rotation of hologram recording medium 30 is 0 degree (referred to as rotational angle α1). When lower-layer holograms 81d to 81f are recorded, hologram recording medium 30 is rotated by a rotational angle α2 (α2 ≠ α1) with respect to an axis parallel to the Y axis. Thus, when hologram recording medium 30 is disposed at rotational angle α1 in a reconstructing operation, only upper-layer holograms 81a to 81c are reconstructed. When hologram recording medium 30 is disposed at rotational angle α2 in a reconstructing operation, only lower-layer holograms 81d to 81f are reconstructed. In this way, cross talk in the reconstructing operation can be reduced.

The first embodiment has been described regarding the double multiplexing in the Z direction. This setting, however, is merely an example. The degree of multiplexing may be further increased, the rotational angle of the recording medium may be finely set, and the number of polarizing directions to which reference beam RL is changed may be increased.

As heretofore described, according to the first embodiment, the multiplex recording in the thickness direction of the hologram recording layer shifts respective positions where holograms are formed in the thickness direction, thereby effectively using the dynamic range of the hologram recording medium and increasing the maximum degree of multiplexing. Thus, the recording density can be increased.

In the case where only the conventional angular multiplexing method is used, even if the thickness of a hologram recording medium is increased, the increased thickness cannot be effectively used and the recording density of the hologram recording medium is limited. In contrast, the angular multiplexing and the shift multiplexing in the focus direction can be combined to increase the recording density. In this case, the polarizing direction of the reference beam can be controlled to implement recording and reconstruction with less cross talk even if the degree of multiplexing is increased.

### Second Embodiment

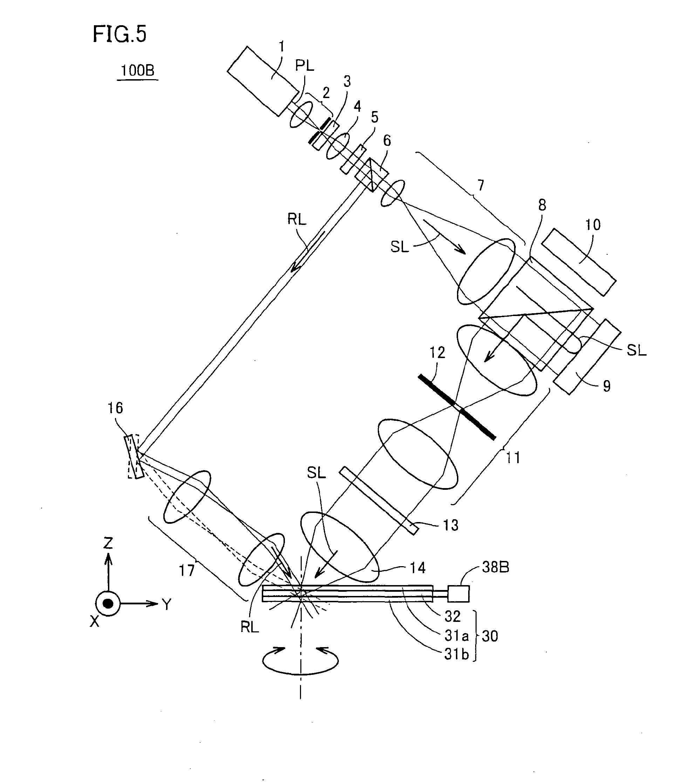

Fig. 5 shows a configuration in a recording operation of a hologram recording and reconstructing apparatus 100B according to a second embodiment of the present invention.

Referring to Fig. 5, the configuration of hologram recording and reconstructing apparatus 100B in the second embodiment differs from hologram recording and reconstructing apparatus 100A in the first embodiment in that hologram recording medium 30 is rotated in the plane of hologram recording medium 30 about the center of rotation that is the point of intersection of respective light axes of reference beam RL and signal beam SL, for recording a hologram. Another difference is that medium drive unit 38A is replaced with a medium drive unit 38B. The description of those components common to the first and second embodiments will not be repeated here.

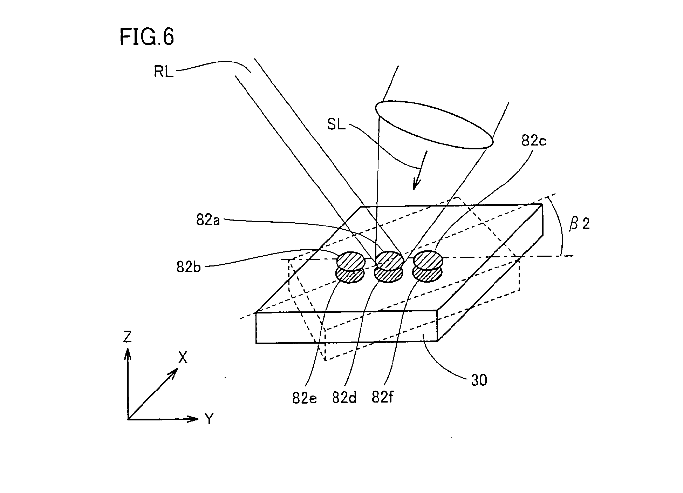

Hologram recording and reconstructing apparatus 100B in the second embodiment rotates hologram recording medium 30 by a rotational angle β (see Fig. 6) in the plane (XY plane) of hologram recording medium 30 about the point of intersection of respective light axes of reference beam RL and signal beam SL. Medium drive unit 38B in Fig. 5 is schematically shown as those in other embodiments.

Fig. 6 is a perspective view showing a positional relation between respective light axes of signal beam SL and reference beam RL for hologram recording medium 30.

Referring to Fig. 6, when upper-layer holograms 82a to 82c are recorded, the angle of rotation of hologram recording medium 30 is 0 degree (refereed to as β1). When lower-layer holograms 82d to 82f are recorded, hologram recording medium 30 is rotated by a rotational angle β2 (β2≠β1) in the XY plane. Thus, in a reconstructing operation, hologram recording medium 30 is disposed at rotational angle β1 so that only upper-layer holograms 82a to 82c are reconstructed. Further, in a reconstructing operation, hologram recording medium 30 is disposed at rotational angle β2 so that only lower-layer holograms 82d to 82f are reconstructed. In this way, cross talk in the reconstructing operation can be reduced.

Therefore, even in the case where hologram recording medium 30 in the rotated state is shifted in the Z direction for recording holograms 82a to 82f at different positions in the thickness direction of hologram recording medium 30, reconstructed beam CL is not generated from a hologram recorded adjacent to the hologram to be reconstructed, and an image can be reconstructed without cross talk. A hologram to be reconstructed can be selected by setting the rotational angle to the rotational angle which is set in recording.

As heretofore described, according to the second embodiment, even in the case where the hologram recording medium is rotated in the plane of the hologram recording medium about the point of intersection of respective light axes of the reference beam and the signal beam and then the recording position is shifted in the thickness direction of the hologram recording medium so as to multiplex holograms in the thickness direction of the hologram recording medium, the amount of cross talk can be remarkably reduced. Therefore, even if the degree of multiplexing is increased, a high-quality signal can be reconstructed. As a consequence, the hologram recording and reconstructing apparatus capable of making a recording and a reconstruction with a large capacity can be implemented.

### Third Embodiment

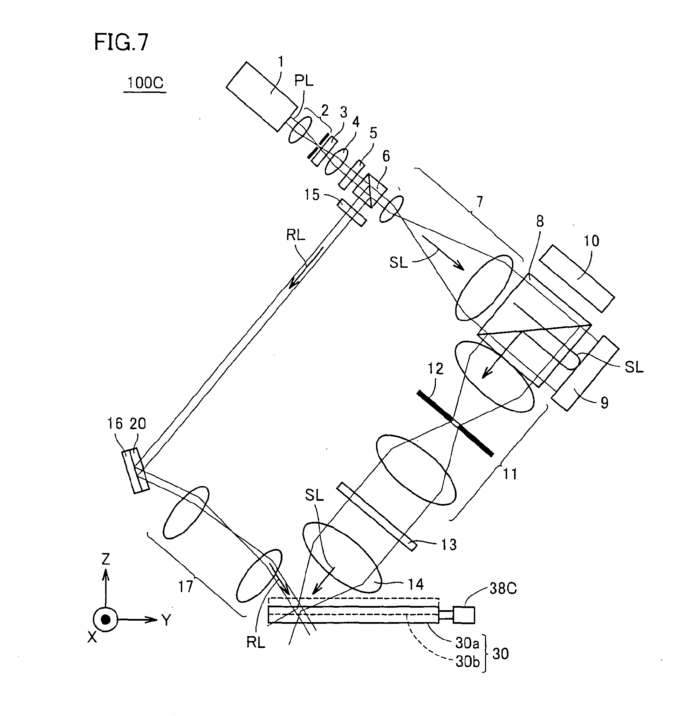

Fig. 7 shows a configuration in a recording operation of a hologram recording and reconstructing apparatus 100C according to a third embodiment of the present invention.

Referring to Fig. 7, hologram recording and reconstructing apparatus 100C in the third embodiment differs from hologram recording and reconstructing apparatus 100A in the first embodiment in that a polarizing hologram 20 is added and medium drive unit 38A is replaced with a medium drive unit 38C. The description of those components common to the first and third embodiments will not be repeated here. Medium drive unit 38C drives hologram recording medium 30 in the X direction and the Y direction, and the Z direction from the position indicated by 30a to the position indicated by 30b for example.

Hologram recording and reconstructing apparatus 100C in Fig. 7 is provided with polarizing hologram 20 located on rotating mirror 16 and having diffraction efficiency changed depending on the direction of polarization. Polarizing hologram 20 can be provided to change the direction of polarization of reference beam RL and thereby change the reference beam to reference beam RLa and reference beam RLb.

Polarizing hologram 20 is configured, for example to generate zero-order diffracted light for incidence of p-polarized light and generate first-order diffracted light for incidence of s-polarized light. With this configuration, half-wave plate 15 can be rotated to change the polarized light of reference beam RL to s-polarized light or p-polarized light and accordingly change the optical path of reference beam RL to reference beam RLa and reference beam RLb for example.

In a recording operation, the direction of polarization of signal beam SL has to be made identical to the direction of polarization of reference beam RL. Therefore, in a recording operation using reference beam RLa and reference beam RLb, half-wave plate 13 for signal beam SL has to be rotated such that the direction of polarization of signal beam SL is adjusted to be identical to the direction of polarization of reference beam RLa and reference beam RLb each. In a reconstructing operation, only the p-polarized reconstructed beam CL (reconstructed image) is incident on image pickup device 10. Therefore, half-wave plate 13 has to be rotated to direct reconstructed beam CL converted into light polarized in an appropriated direction to image pickup device 10.

The third embodiment has been described regarding the method of double-multiplexing in the Z direction and changing the direction of polarization of reference beam RL between the two directions. This setting, however, is merely an example and the degree of multiplexing may further be increased and the number of polarizing directions to which reference beam RL can be changed may be increased.

As heretofore described, according to the third embodiment, the polarizing hologram is formed on the rotating mirror, the direction of polarization of the reference beam is changed, and the recording position is changed in the thickness direction of the hologram recording medium. Thus, even when holograms are multiplexed in the thickness direction of the hologram recording medium, the amount of cross talk can be reduced to a great degree. Therefore, even if the degree of multiplexing is increased, a high-quality signal can be reconstructed. As a consequence, the hologram recording and reconstructing apparatus capable of making a record and a reconstruction with a large capacity can be implemented.

### Fourth Embodiment

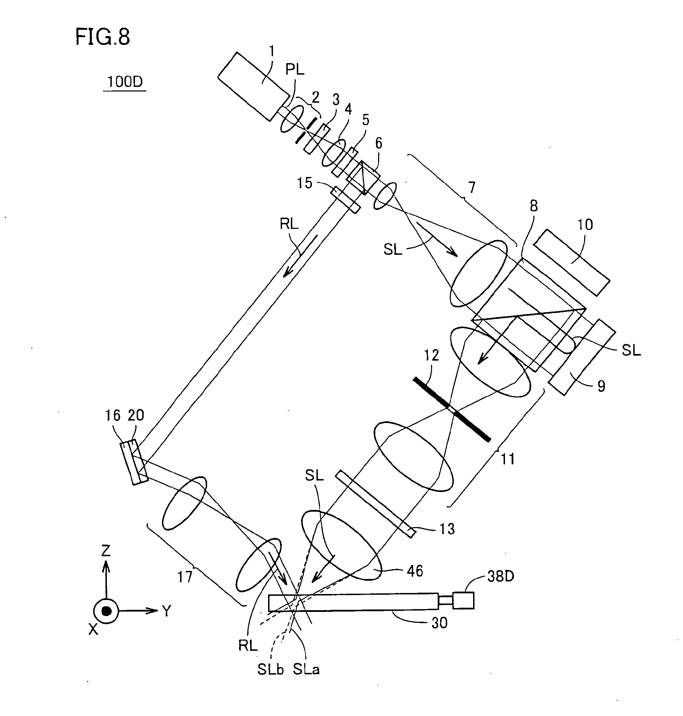

Fig. 8 shows a configuration in a recording operation of a hologram recording and reconstructing apparatus 100D according to a fourth embodiment of the present invention.

Referring to Fig. 8, hologram recording and reconstructing apparatus 100D in the fourth embodiment differs from hologram recording and reconstructing apparatus 100A in the first embodiment in that objective lens 14 is replaced with a two-focus lens 46 and medium drive unit 38A is replaced with a medium drive unit 38D. The description of those components common to the first and fourth embodiments will not be repeated here. Medium drive unit 38D drives hologram recording medium 30 in at least the X direction and Y direction.

Hologram recording and reconstructing apparatus 100D in the fourth embodiment uses, as an objective lens, two-focus lens 46 having different focal lengths depending on the direction of polarization. Such a lens can be obtained for example by processing a glass material having optical anisotropy. As shown in Fig. 8, when p-polarized signal beam SL enters two-focus lens 46, signal beam SL is collected as shown by a signal beam SLa. When s-polarized signal beam SL enters two-focus lens 46, signal beam SL is collected as shown by a signal beam SLb. The beam diameter of reference beam RL is made large so that both of the points where p-polarized signal beam SL and s-polarized signal beam SL are collected can be irradiated with the reference beam.

By disposing two-focus lens 46 as described above, the direction of polarization of signal beam SL can be merely switched to change the point where the beam of signal beam SL is collected in the medium-thickness direction in hologram recording medium 30, without the need to shift hologram recording medium 30 in the Z direction.

The third embodiment has been described regarding the configuration where objective lens 14 is replaced with two-focus lens 46. This configuration is applicable as well to the first and second embodiments. Specifically, for the hologram recording and reconstructing apparatuses in the first and second embodiments, any mechanism for driving hologram recording medium 30 in the Z direction is unnecessary when recording is made at different positions in the thickness direction.

As heretofore described, according to the fourth embodiment, the two-focus lens is employed instead of the objective lens in the configuration of the hologram recording and reconstructing apparatus of the first embodiment. Thus, holograms can be multiplexed in the thickness direction of the medium without driving the hologram recording medium in the Z direction. Therefore, any mechanism for driving the hologram recording medium in the Z direction is unnecessary and the number of components is accordingly reduced, which is effective for reduction in size and weight as well as reduction in cost.

### Fifth Embodiment

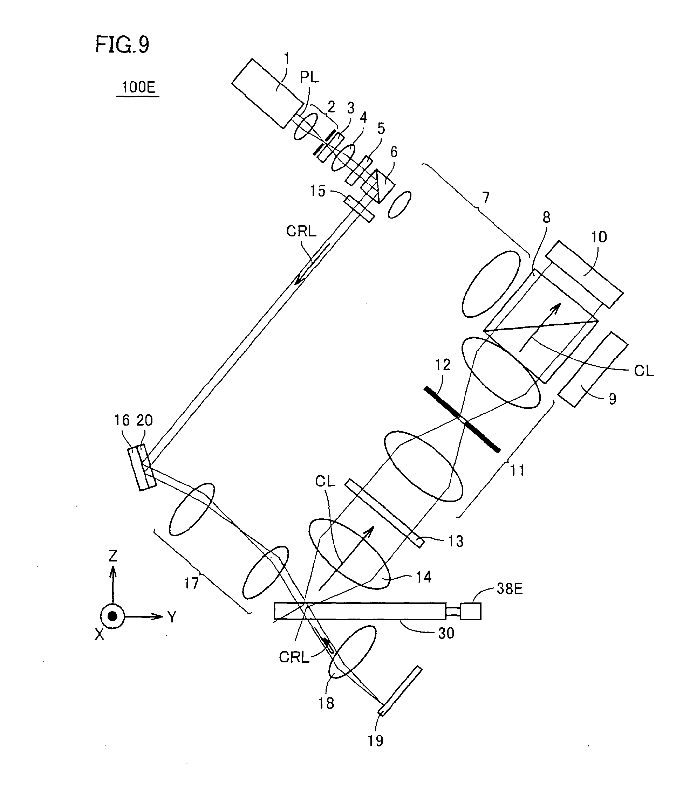

Fig. 9 shows a configuration in a reconstructing operation of a hologram recording and reconstructing apparatus 100E according to a fifth embodiment of the present invention.

Referring to Fig. 9, hologram recording and reconstructing apparatus 100E in the fifth embodiment differs from hologram recording and reconstructing apparatus 100A in Fig. 2 of the first embodiment in that a rectangular aperture 12 is provided that blocks a reconstructed beam from a hologram adjacent to a hologram to be reconstructed in a reconstructing operation. Another difference is that medium drive unit 38A is replaced with a medium drive unit 38E. The description of those components common to the first and fifth embodiments will not be repeated here. Medium drive unit 38E drives hologram recording medium 30 in the X direction, Y direction and Z direction.

In hologram recording and reconstructing apparatus 100E of the fifth embodiment in a reconstructing operation, a polytopic aperture is disposed as rectangular aperture 12 at a focal plane of relay lens 11. Thus, a reconstructed image with less cross talk can be obtained even if the recording pitch in any in-plane direction (X direction, Y direction) of hologram recording medium 30 is narrowed.

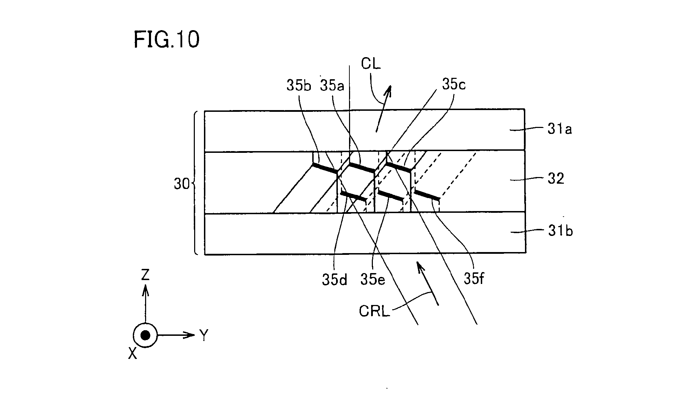

With reference to Fig. 10, a description will be given of the fact that the cross talk is reduced even if the recording pitch of hologram recording medium 30 is narrowed.

Fig. 10 is a cross section showing an example of a structure of hologram recording medium 30.

Hologram recording medium 30 includes glass substrates 31a, 31b and a hologram recording layer 32. For hologram recording layer 32, a photopolymer material sensitive to the oscillating wavelength of laser source 1 in Fig. 9 is used. In hologram recording and reconstructing apparatus 100E, signal beam SL collected by objective lens 14 and parallel reference beam RL interfere with each other and accordingly a hologram is recorded. Therefore, holograms are each recorded with a high intensity at the point where signal beam SL is collected. In Fig. 10, the record is made with holograms 35a to 35c recorded in a central region.

Further, hologram recording and reconstructing apparatus 100E shifts hologram recording medium 30 in the Z direction for recording a hologram. At this time, the point where signal beam SL is collected is also shifted in the Z direction in hologram recording layer 32. Therefore, holograms are recorded such that the central region of recorded holograms is also shifted from the region of holograms 35a to 35c to the region of holograms 35d to 35f

In Fig. 10, reference beam for reconstruction CRL used for reconstructing hologram 35a is applied, and accordingly reconstructed beam CL is generated from hologram 35a. At this time, reference beam for reconstruction CRL is also applied to holograms 35b to 35f adjacent to hologram 35a. Therefore, reconstructed beams CL are also generated from holograms 35b to 35f.

Of the generated reconstructed beams, reconstructed beams CL from holograms 35b and 35c form an image on the plane where rectangular aperture 12 which is a polytopic aperture is disposed, and thus the reconstructed beams can be blocked by rectangular aperture 12. Therefore, hologram recording and reconstructing apparatus 100E in the fifth embodiment can perform a reconstructing operation with less cross talk even if the recording pitch in any in-plane direction (X direction, Y direction) of hologram recording medium 30 is narrowed.

Further, as described in connection with the first to third embodiments, hologram recording and reconstructing apparatus 100E in the fifth embodiment changes the optical axis of reference beam RL in a recording operation depending on whether upper-layer holograms 35a to 35c of hologram recording layer 32 are to be recorded or lower-layer holograms 35d to 35f thereof are to be recorded. Thus, regarding reconstructed beam CL from holograms 35d and 35e, cross talk can be reduced.

The manner of the fifth embodiment of providing rectangular aperture 12 so that the amount of cross talk within the plane can be reduced is applicable not only to the reconstructing operation but to the recording operation and is further applicable to other embodiments such as the first and second embodiments.

As heretofore described, according to the fifth embodiment, the rectangular aperture can be provided to reduce the amount of in-plane cross talk and thereby increase the recording density. Further, in combination with the multiplexing of holograms in the thickness direction of the hologram recording medium, the hologram recording and reconstructing apparatus capable of making a record and a reconstruction with a large capacity can be implemented.

### Sixth Embodiment

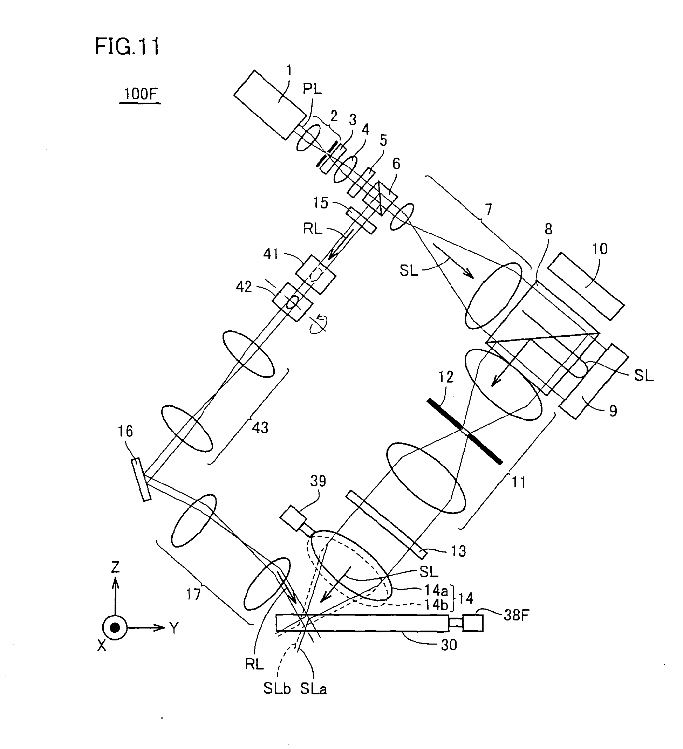

Fig. 11 shows a configuration in a recording operation of a hologram recording and reconstructing apparatus 100F according to a sixth embodiment of the present invention.

Referring to Fig. 11, the configuration of hologram recording and reconstructing apparatus 100F in the sixth embodiment differs from that of hologram recording and reconstructing apparatuses 100C and 100E in the third and fifth embodiments in that a rotating mirror 42 and a relay lens 43 are provided instead of polarizing hologram 20, a device drive unit 39 and a mirror 41 are newly added and medium drive units 38C and 38E are replaced with a medium drive unit 38F. The description of those components common to the third and fifth embodiments and the sixth embodiment will not be repeated here. Medium drive unit 38F drives hologram recording medium 30 in the X direction and Y direction.

Reference beam RL reflected by beam splitter 6 passes through half-wave plate 15 and the traveling direction of the light is bent by mirror 41 in the X axis direction. The bent reference beam RL is further deflected by rotating mirror 42 that is rotatable in the direction perpendicular to the axis of the light. Deflected reference beam RL is directed to rotating mirror 16 by relay lens 43 configured with two telecentric lenses. Since relay lens 43 is configured using two telecentric lenses, the position of incidence of reference beam RL on rotating mirror 16 does not change even if rotating mirror 42 is rotated. An example of a mirror of high response speed and high angular precision is a galvano mirror.

As described above, hologram recording and reconstructing apparatus 100F in the sixth embodiment uses rotating mirror 42 and relay lens 43 to deflect reference beam RL in the X-axis direction. Thus, the deflection optical system deflecting reference beam RL in the X-axis direction can be provided to further increase the degree of multiplexing of recording.

The hologram recording and reconstructing apparatuses in the third to fifth embodiments use two types of light, namely s-polarized light and p-polarized light. Therefore, the degree of multiplexing can merely be doubled as compared with the conventional angular multiplexing. In contrast, the configuration of hologram recording and reconstructing apparatus 100F in the sixth embodiment can increase the number of directions in which reference beam RL is deflected, and thus the degree of multiplexing of recording can further be increased.

Further, device drive unit 39 provided in the sixth embodiment drives objective lens 14 along the direction of the optical axis of signal beam SL. As shown in Fig. 11, when the objective lens is driven to the position shown by objective lens 14a, signal beam SL is collected as shown by signal beam SLa. When the objective lens is driven to the position indicated by objective lens 14b, signal beam SL is collected as indicated by signal beam SLb. In this way, device drive unit 39 drives hologram recording medium 30 in the Z direction, so that the point where the beam of signal beam SL is collected in hologram recording medium 30 can be changed in the thickness direction of the medium without shifting hologram recording medium 30 in the Z direction.

As compared with hologram recording medium 30, objective lens 14 is lighter in weight. Therefore, device drive unit 39 can be provided to speedily change the position where the light is collected, in the thickness direction of the medium. Here, instead of objective lens 14, relay lens 1 I may be driven in the direction of the axis of light to change the position where the light is collected in hologram recording medium 30.

As heretofore described, according to the sixth embodiment, the rotating mirror and the relay lens can be used, instead of the polarizing hologram, in the configuration of the hologram recording and reconstructing apparatuses in the third and fifth embodiments, to further increase the degree of multiplexing of recording by deflecting the reference beam in the X-axis direction. Further, the device drive unit can be newly added to multiplex holograms in the thickness direction of the medium without driving the hologram recording medium in the Z direction.

Although the present invention has been described and illustrated in detail, it is clearly understood that the same is by way of illustration and example only and is not to be taken by way of limitation, the scope of the present invention being interpreted by the terms of the appended claims.

## Claims

1. A hologram recording and reconstructing apparatus (100A-100E) recording an interference fringe of a reference beam (RL) and a signal beam (SL) as a hologram in a recording medium (30) and reconstructing the hologram recorded in said recording medium, comprising:
a deflection unit (16, 42, 46) changing an angle of incidence of said reference beam incident on said recording medium such that multiple data is recorded in a same recording region of said recording medium; and
a drive unit (38A-38E, 39) changing an angle formed by a plane including respective light axes of said reference beam and said signal beam and a plane of said recording medium.

2. The hologram recording and reconstructing apparatus according to claim 1, wherein
said drive unit rotates said recording medium about an axis that is a line of intersection where the plane including respective light axes of said reference beam and said signal beam and the plane of said recording medium intersect with each other.

3. A hologram recording and reconstructing apparatus (100A-100E) recording an interference fringe of a reference beam (RL) and a signal beam (SL) as a hologram in a recording medium (30) and reconstructing the hologram recorded in said recording medium, comprising:
a deflection unit (16, 42, 46) changing an angle of incidence of said reference beam incident on said recording medium such that multiple data is recorded in a same recording region of said recording medium; and
a drive unit (38A-38E, 39) changing an angle of a line of intersection in a plane of said recording medium, said line of intersection being a line where a plane including respective light axes of said reference beam and said signal beam and the plane of said recording medium intersect with each other.

4. The hologram recording and reconstructing apparatus according to claim 3, wherein
said drive unit rotates said recording medium in the plane of said recording medium about a center of rotation that is a point of intersection where respective light axes of said reference beam and said signal beam intersect with each other.

5. A hologram recording and reconstructing apparatus (100A-100E) recording an interference fringe of a reference beam (RL) and a signal beam (SL) as a hologram in a recording medium (30) and reconstructing the hologram recorded in said recording medium, comprising:
a deflection unit (16, 42, 46) changing an angle of incidence of said reference beam incident on said recording medium such that multiple data is recorded in a same recording region of said recording medium; and
a light blocking unit (12) blocking reconstructed beams from holograms adjacent to said hologram to be recorded,
said deflection unit deflecting said reference beam in a first plane including an optical axis of said signal beam and a line normal to said recording medium and in a second plane perpendicular to said first plane.

6. The hologram recording and reconstructing apparatus according to any of claims 1 to 5, further comprising a medium drive unit (38A-38E) driving said recording medium in a direction normal to said recording medium or a direction along the optical axis of said signal beam.

7. The hologram recording and reconstructing apparatus according to claim 5, wherein
said deflection unit changes the angle of incidence of said reference beam incident on said recording medium according to a shift of said recording medium.

8. The hologram recording and reconstructing apparatus according to any of claims 1 to 5, further comprising a device drive unit (39) driving a light collecting device included in an optical system generating said signal beam, along the optical axis of said signal beam.

9. The hologram recording and reconstructing apparatus according to claim 8, wherein
said deflection unit changes the angle of incidence of said reference beam incident on said recording medium according to a shift of said light collecting device.

10. The hologram recording and reconstructing apparatus according to any of claims 1 to 9, wherein
said deflection unit includes a rotating mirror (16, 42).

11. The hologram recording and reconstructing apparatus according to claim 5, wherein
said deflection unit includes a two-focus lens (46) directing said signal beam to said recording medium.

12. The hologram recording and reconstructing apparatus according to any of claims 5 to 7, 10 and 11, wherein
said deflection unit is provided with a polarizing hologram (20) having a diffraction efficiency changed according to a direction of polarization of an incident light.

13. The hologram recording and reconstructing apparatus according to any of claims 5 to 12, further comprising a spatial light modulator (9) modulating said signal beam, wherein
said spatial light modulator is a reflective liquid crystal spatial light modulator converting incident said signal beam into a p-polarized light or s-polarized light pixel by pixel and emitting the converted signal beam.

14. A hologram recording and reconstructing method (100A-100E) of recording an interference fringe of a reference beam (RL) and a signal beam (SL) as a hologram in a recording medium (30) and reconstructing the hologram recorded in said recording medium, comprising the steps of:
changing an angle of incidence of said reference beam (16, 42, 46) incident on said recording medium such that multiple data is recorded in a same recording region of said recording medium; and
rotating said recording medium (38A-38E) about an axis that is a line of intersection where a plane including respective light axes of said reference beam and said signal beam and a plane of said recording medium intersect with each other.

15. A hologram recording and reconstructing method (100A-100E) of recording an interference fringe of a reference beam (RL) and a signal beam (SL) as a hologram in a recording medium (30) and reconstructing the hologram recorded in said recording medium, comprising the steps of:
changing an angle of incidence of said reference beam (16, 42, 46) incident on said recording medium such that multiple data is recorded in a same recording region of said recording medium; and
rotating said recording medium (38A-38E) in a plane of said recording medium about a center of rotation that is a point of intersection where respective light axes of said reference beam and said signal beam intersect with each other.

16. A hologram recording and reconstructing method (100A-100E) of recording an interference fringe of a reference beam (RL) and a signal beam (SL) as a hologram in a recording medium (30) and reconstructing the hologram recorded in said recording medium, comprising the steps of:
changing an angle of incidence of said reference beam (16, 42, 46) incident on said recording medium such that multiple data is recorded in a same recording region of said recording medium; and
blocking a reconstructed beam (12) from a hologram adjacent to said hologram to be recorded.

17. The hologram recording and reconstructing method according to claim 16, wherein
said step of changing the angle of incidence includes the step of deflecting said reference beam in a first plane including an optical axis of said signal beam and a line normal to said recording medium and in a second plane perpendicular to said first plane.

18. The hologram recording and reconstructing method according to any of claims 14 to 17, wherein
said step of changing the angle of incidence includes the step of changing the angle of incidence of said reference beam incident on said recording medium, according to a shift of said recording medium or a shift of a light collecting device included in an optical system generating said signal beam.
